# EUROPEAN PATENT SPECIFICATION

(11) **EP 1 484 540 B1**
(45) Date of publication and mention of the grant of the patent: **07.11.2007**
(21) Application number: 04012235.0
(22) Date of filing: 24.05.2004
(51) Int. Cl.: F16K 31/126, F16K 11/048

(54) **Actuating membrane in particular for pneumatic valves**
Betätigungsmembran insbesondere für pneumatische Ventile
Membrane de commande, en particulier pour soupapes pneumatiques

(30) Priority: 03.06.2003 IT PD20030043 U
(43) Date of publication of application: 08.12.2004
(73) Proprietor: MEC Fluid 2 S.r.l., 35042 Este(Padova) (IT)
(72) Inventor: Bonato, Edoardo, 35042 Este (Padova) (IT)
(74) Representative: Modiano, Micaela Nadia

(56) References cited:
- FR-A- 2 206 468
- US-A- 3 415 284

## Description

The present invention relates to a membrane, particularly but not exclusively for controlled vacuum, which can be used in pneumatic valves having a membrane that actuates a flow control assembly.

The present invention further relates to a pneumatic valve of the type having a membrane that actuates a flow control assembly, particularly but not exclusively of the indirect electropneumatically-operated type.

Pneumatic valves of the type with a membrane that actuates a flow control assembly are currently known.

Such valves are constituted by a valve body inside which there is a receptacle that slidingly accommodates a flow control assembly formed by a supporting stem for two conical flow control elements, which are arranged so as to be mutually opposite and face corresponding sealing seats, against which they respectively abut during the operation of said valve.

Considering for example a three-way two-position (3/2) closed-center (NC) valve, the receptacle is functionally connected to a first port for the main supply of the fluid on which the valve acts and to a second port and a third port, each of which is functionally connected to a corresponding environment located outside the valve, respectively the user system and the discharge.

Such valves are provided with a flat circular membrane, which is locked by means of its outer rim on said valve body and is centrally locked on the flow control assembly.

Alternatively, such valves are provided with a membrane as defined in the preamble of claim 1 and that is constituted by a corrugated metal sheet as disclosed in FR 2206468.

The membrane forms in the receptacle a first chamber for connection between the first, second and third port and a second chamber, which is functionally connected to an actuation unit, for example a typical solenoid-based electropneumatic unit.

The first port for the main supply of fluid is further functionally connected to said electropneumatic actuation unit.

On the opposite side of the membrane with respect to the flow control assembly there are means for return into position that assist the movement of said membrane, typically an elastic spring that contrasts the actuation force.

In the normal position (since this is an NC valve), the first supply port is isolated and the second and third ports are connected; in this step, the port for connecting the supply to the electropneumatic actuation unit also is isolated.

In this step, the second chamber is in partial vacuum and attracts the membrane, and therefore the flow control assembly, in a direction that isolates the first feed port.

By actuating the electropneumatic actuation unit, the first (pressurized) feed port is connected to the second chamber; in this way, the membrane (and the flow control assembly) are moved so as to connect the first port to the user system, isolating the discharge.

To do this, the pressure in the second chamber must also overcome the contrast force of the elastic spring for return to the initial position.

If the signal is no longer provided to the electropneumatic actuation unit, the initial situation is restored.

Although these valves have been known and used for many years, they are not free from drawbacks.

The main drawback relates to the membrane for actuating the flow control assembly.

Such valves must in fact operate for a very large number of operating cycles, and accordingly the membranes of the valves are subject to a very large number of deformation cycles.

For this reason, over time the membranes wear out and tear especially proximate to the points of contact with the valve body and the flow control assembly.

Accordingly, the membranes must be thick enough to ensure the necessary strength.

The materials also must be chosen so as to resist for a long time; said membranes are typically made out of blanked portions of sheets of rubber reinforced with textile inserts.

This oversizing is detrimental to the sensitivity of their movement and thus slows the action of the valve.

Moreover, the actuation of the valve must overcome the elastic contrast of the membrane (the larger its size, the greater the contrast force) and of the elastic spring for return to position; accordingly, intense forces are required in order to actuate the valve.

As noted, swift actuation of the valve is an important characteristic; for this reason, in recent years attempts have been made to minimize the masses of the moving components inside the valves.

Currently, for example, an annular recess is provided in conical flow control elements (which are generally injection-molded) proximate to the inclined sealing region (the choice of the position of the recess is due to easy extraction of the flow control element from the mold).

However, the position of the recess is critical, since due to wear caused by the large number of operating cycles of the valve and due to possible inaccuracies in molding, it may reduce the degree of tightness of the valve.

The aim of the present invention is to provide a membrane, particularly for controlled vacuum, usable in pneumatic valves having a membrane that actuates a flow control assembly, that solves the drawbacks noted above in known types.

Within this aim, an object of the present invention is to provide a membrane, particularly for controlled vacuum, usable in pneumatic valves having a membrane that actuates a flow control assembly, that is particularly resistant to a large number of operating cycles.

Another object of the present invention is to provide a membrane, particularly for controlled vacuum, usable in pneumatic valves having a membrane that actuates a flow control assembly, that is more compact and is made of less expensive material than known types, thus leading to a cost reduction.

A further object of the present invention is to provide a membrane, particularly for controlled vacuum, usable in pneumatic valves having a membrane that actuates a flow control assembly, that allows higher sensitivity in the actuation of the valves to which it is applied.

A still further object of the present invention is to provide a pneumatic valve of the type with a membrane that actuates a flow control assembly, particularly of the indirect electropneumatically-actuated type, that solves the problems noted in the corresponding known valves.

This aim and these and other objects that will become better apparent hereinafter are achieved by a membrane, according to claim 1.

Advantageously, the present invention comprises a pneumatic valve of the type having a membrane that actuates a flow control assembly, particularly of the indirect electropneumatically-actuated type, comprising said membrane.

Further characteristics and advantages of the present invention will become better apparent from the following detailed description of a preferred but not exclusive embodiment thereof, illustrated by way of nonlimiting example in the accompanying drawings, wherein:

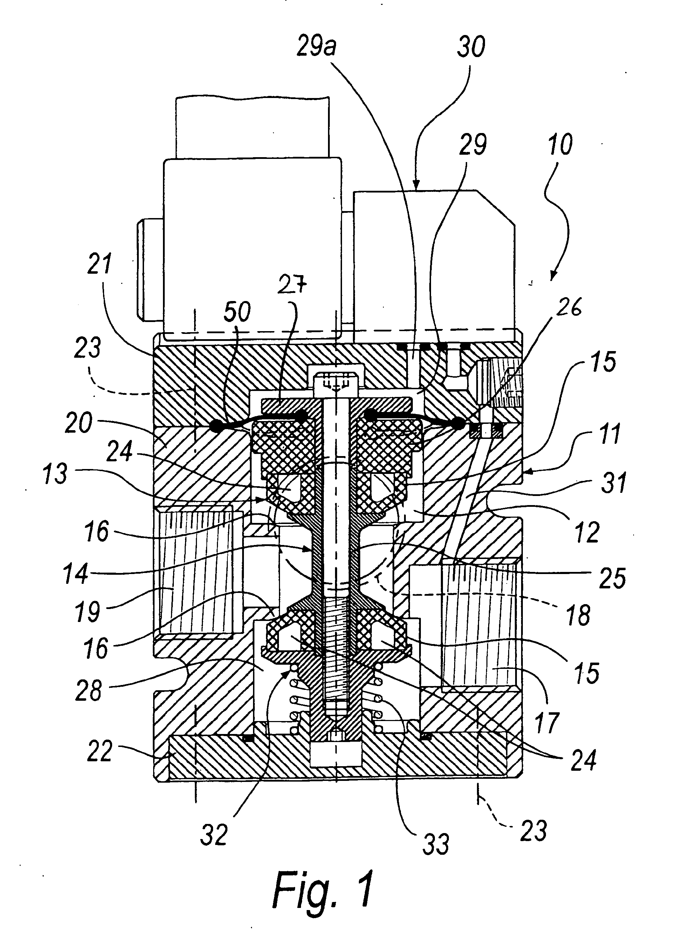

Figure 1 is a sectional view of a pneumatic valve according to the invention;

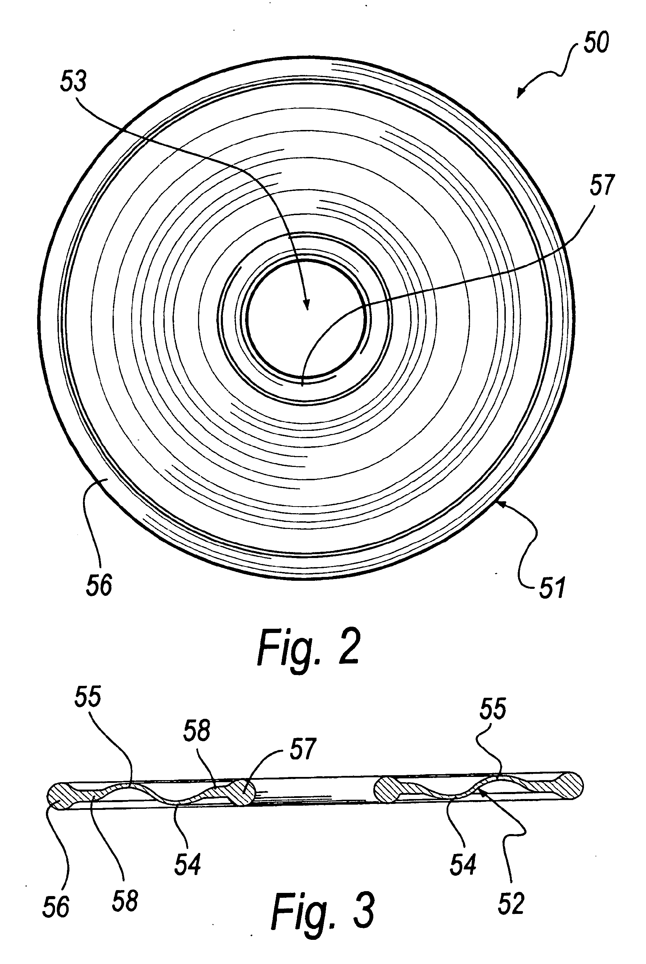

Figure 2 is a plan view of a membrane according to the invention;
Figure 3 is a transverse sectional view of a membrane according to the invention.

With reference to the figures, a pneumatic valve of the type having a membrane that actuates a flow control assembly, particularly of the indirect electropneumatically-actuated type, according to the invention, is generally designated by the reference numeral 10.

In this preferred embodiment, the valve is of the three-way two-position (3/2) type, with closed centers (NC).

The pneumatic valve 10 comprises a valve body 11, which contains a receptacle 12 in which a flow control assembly 13 is arranged so that it can slide; the flow control assembly is formed by a stem 14 that supports two mutually opposite conical flow control elements 15.

The two conical flow control elements 15 face corresponding sealing seats 16, against which they abut respectively during the operation of the valve 10.

The receptacle 12 is functionally connected to a first port 17 for the main supply of the fluid on which the valve acts and to a second port 18 and a third port 19, each of which is functionally connected to a corresponding environment that lies outside the valve, such as the user system and the discharge.

The valve body 11 is composed of a central block 20, which is open at its two ends, by a first endplate 21 and by a second endplate 22 which lies opposite the first endplate 21; the endplates 21 and 22 are coupled to the central block 20 by means of threaded elements 23.

The stem 14 is formed by a central bobbin-like portion 25, on the ends of which the conical flow control elements 15 are arranged in abutment.

A cylinder 26 is arranged in series to the flow control element 15 that is arranged toward the first endplate 21, and a locking disk 27 is arranged in series to the cylinder.

Both conical flow control elements 15 have, on the opposite side with respect to the respective sealing seats 16 and coaxially to their own axis, an annular recess 24.

A membrane 50 for actuating the flow control assembly 13 is provided between the valve body 11 and the flow control assembly.

The membrane 50 forms, in the receptacle 12, a first chamber 28 for connection between the first, second and third ports 17, 18 and 19, and a second chamber 29, which is functionally connected to an electropneumatic actuation unit 30, which is of a per se known type.

The first main fluid supply port 17 is further functionally connected to the electropneumatic actuation unit 30 by means of a channel 31, which is internal to the block 20 and to the first endplate 21.

The electropneumatic actuation unit 30 is functionally connected to the second chamber 29 by means of a duct 29a.

Means 32 for return to the non-actuated position, in this case the closed-center position, are associated with the flow control assembly 13 and are constituted by a helical spring 33, which is arranged between the second endplate 22 and an abutment formed on the flow control assembly on the opposite side of the membrane with respect to the bobbin 25.

The membrane 50 is constituted by a disk 51, which is made of at least partially elastic material, such as for example an injection-molded polymeric material.

In transverse cross-section, the disk 51 has, in this embodiment, a region with an undulated profile 52.

The disk 51 is provided axially with a hole 53 for centering and locking on the flow control element 13, which is actuated by said membrane.

The region 52 having an undulated profile is formed, when the membrane is in the active position, by an undulation that has, from the center toward the outside of the disk 51, a convex portion 54 that is directed toward the flow control assembly 13 and a concave portion 55 in series to the convex portion 54.

In practice, the region 52 having an undulated profile is therefore formed on a ring.

The transverse cross-sections of the outer rim 56 and of the inner rim 57 of the disk 51 with said hole are partially circular, with diameters that are larger than the thickness of the region 52 having an undulated profile.

Portions 58 of the disk 51 that are contiguous to the outer and inner rims 56 and 57 are flat, and their thickness is comprised between the diameter of the rims 56 and 57 and the diameter of the region 52 having an undulated profile.

The membrane 50 is locked by its outer rim 56 on the valve body 11 and by its inner rim 57 on the flow control assembly 13.

In particular, the membrane 50 is sandwiched by its outer rim 56 between the central block 20 and the first endplate 21.

On the flow control assembly 13, the membrane is sandwiched between the cylinder 26 and the locking disk 27.

Moreover, the membrane 50 is substantially in contact with the cylinder 26 of the flow control assembly 13 along the convex portion of the region 52 having an undulated profile.

The outer rim 56 and the inner rim 57 are accommodated in corresponding complementarily shaped annular slots (not designated by reference numerals in the figures), which are formed in the flow control assembly 13 and the valve body 11 and ensure stable locking of the membrane.

The operation of the valve is as follows.

In the normal position (since this is an NC valve), the first feed port 17 is isolated and the second and third ports 18 and 19 are connected; in this step, the channel 31 for connection to the electropneumatic actuation unit 30 is also isolated.

In this step, the second chamber 29 is in partial vacuum and draws the membrane, and therefore the flow control assembly 13, in a direction that isolates the first feed port, moving the corresponding conical flow control element 15 into abutment on the corresponding sealing seat 16.

This arrangement of the flow control assembly 13 is also ensured by the thrust of the helical spring 33.

By actuating the electropneumatic actuation unit 30, the first feed path 17 (which is pressurized) is connected to the second chamber 29; in this manner, the membrane 50 is moved (and accordingly the flow control assembly 13 is made to perform a translational motion) so as to connect the first port 17 to the user, isolating the discharge.

To do this, the pressure in the second chamber 29 must also overcome the contrast force of the elastic spring 33.

If the signal is no longer provided to the electropneumatic actuation unit, the initial situation is restored.

The undulation of the membrane 50, with the convex portion 54 and the concave portion 55, allows a longer stroke of the membrane and accordingly of the flow control assembly 13 without exceeding the critical threshold of the strength of the material of which the membrane is made; it is therefore possible to use less expensive materials for an equal strength.

The undulation of the membrane 50, with the convex portion 54 and the concave portion 55, produces a spring-like effect, which assists the movement of the flow control assembly during its actuation, increasing the speed of the assembly and therefore increasing the overall speed of the valve.

The reduced thicknesses of the undulated part 52 allow the use of less material with respect to known membranes, reducing the production costs of said membranes.

The reduced thicknesses, for an equal strength with respect to known membranes, lead to reduced masses to be moved and therefore, in combination with the spring-like effect of the undulation, to higher overall sensitivity of the membrane to movement.

It should also be noted that the provision of recesses on the conical flow control elements in the opposite position with respect to the sealing seats has reduced the moving masses, improving the response of the valve and in any case avoiding the risk of reducing the tightness of the valve over time.

In practice it has been found that the invention thus described solves the problems noted in known types of membrane for pneumatic valves of the type having a membrane that actuates a flow control assembly and in pneumatic valves that use said known membranes.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A membrane, particularly for controlled vacuum, usable in pneumatic valves having a membrane that actuates a flow control assembly, constituted by a disk (51) made of at least partially elastic material and that has, in transverse cross-section, at least one region (52) that has an undulated profile comprising a convex portion (54) and a concave portion (55) in series to said convex portion (54), **characterized in that** said disk (51) is made of polymeric material, said region (52) of undulated profile having a reduced thickness.

2. The membrane according to claim 1, **characterized in that** said disk (51) is provided axially with a hole (53) for centering and locking on the flow control assembly actuated by said membrane (50), said at least one region (52) having an undulated profile being formed, when said membrane (50) is in the active configuration, by an undulation that has, from the center toward the outside of said disk (51), said convex portion (54) that is directed toward said flow control assembly and said concave portion (55) in series to said convex portion (54).

3. The membrane according to claim 2, **characterized in that** the transverse cross-sections of the outer rim (56) and of the inner rim (57) of said disk (51) with said hole (53) are partially circular, with diameters that are larger than the thickness of said at least one region having an undulated profile (52).

4. The membrane according to claim 3, **characterized in that** the parts (58) of said disk (51) that are contiguous to said outer rim (56) and said inner rim (57) are flat and have a thickness that is comprised between the diameter of said rims (56, 57) and of said at least one region (52) having an undulated profile.

5. The membrane according to one or more of the preceding claims, **characterized in that** it is produced by injection-molding.

6. A pneumatic valve of the type having a membrane that actuates a flow control assembly (13), particularly with indirect electropneumatic actuation, **characterized in that** it comprises a membrane (50) according to one or more of the preceding claims.

7. The pneumatic valve according to claim 6, **characterized in that** it comprises a valve body (11) internally provided with a receptacle (12), in which a flow control assembly (13) is arranged so that it can slide, said flow control assembly being formed by a stem (14) for supporting two mutually opposite conical flow control elements (15), which face corresponding sealing seats (16) on which they abut respectively during the operation of said valve (10), said receptacle (12) being functionally connected to a first main fluid supply port (17), on which said valve (10) acts, and to a second port (18) and a third port (19), each of which is functionally connected to a corresponding environment located outside the valve, said membrane (50) being locked by said outer rim (56) on said valve body (11) and by said inner rim (57) on said flow control assembly (13), said membrane (50) being substantially in contact with said flow control assembly (13) along said convex portion (54) of said region (52) having an undulated profile, said membrane (50) forming, in said receptacle, a first chamber (28) for connection between said first port (17), said second port (18) and said third port (19), and a second chamber (29), which is functionally connected to an electropneumatic actuation unit (30), said first main fluid supply port (17) being further functionally connected to said electropneumatic actuation unit (30), means (32) for return to the inactive position being associated with said flow control assembly (13).

8. The pneumatic valve according to claim 7, **characterized in that** said valve body (11) is composed of a central block (20), which is open at its two ends and on which said first chamber (28) is formed, of a first closure endplate (21), which forms said second chamber (29) together with said membrane (50), and of a second closure endplate (22), which lies opposite said first endplate (21), said membrane (50) being sandwiched by said outer rim (56) between said central block (20) and said first endplate (21).

9. The pneumatic valve according to one or more of claims 7 to 8, **characterized in that** said conical flow control elements (15) have an annular recess (24) on the opposite side with respect to the respective said sealing seats (16).

## Patentansprüche

1. Eine Membran, insbesondere für kontrolliertes Vakuum, verwendbar in pneumatischen Ventilen, die eine Membran aufweist, die eine Durchflußanordnung betätigt, gebildet von einer Scheibe (51), die aus mindestens teilweise elastischem Material besteht, und die im Querschnitt mindestens einen Bereich (52) aufweist, der ein Wellenprofil aufweist, umfassend einen konvexen Teil (54) und einen an den konvexen Teil (54) anschließenden konkaven Teil (55), **dadurch gekennzeichnet, dass** die Scheibe (51) aus Polymermaterial besteht, wobei der Bereich (52) des Wellenprofils eine geringere Dicke aufweist.

2. Die Membran gemäß Anspruch 1, **dadurch gekennzeichnet, dass** die Scheibe (51) axial mit einer Bohrung (53) zum Zentrieren und Arretieren der von der Membran (50) betätigten Durchflußanordnung bereitgestellt ist, wobei der mindestens eine Bereich (52) mit einem Wellenprofil von einer Wellung gebildet ist, die, wenn die Membran (50) in der aktiven Konfiguration ist, von der Mitte in Richtung der Außenseite der Scheibe (51) den konvexen Teil (54), der in Richtung der Durchflußanordnung weist und den an den konvexen Teil (54) anschließenden konkaven Teil (55), aufweist.

3. Die Membran gemäß Anspruch 2, **dadurch gekennzeichnet, dass** die Querschnitte der äußeren Kante (56) und der inneren Kante (57) der Scheibe (51) mit der Bohrung (53) teilweise kreisförmig sind, mit Durchmessern, die größer als die Dicke des mindestens einen Bereichs mit einem Wellenprofil (52) sind.

4. Die Membran gemäß Anspruch 3, **dadurch gekennzeichnet, dass** die Teile (58) der Scheibe (51), die der äußeren Kante (56) und der inneren Kante (57) benachbart sind, flach sind und eine Dicke aufweisen, die sich zwischen dem Durchmesser der Kanten (56, 57) und des mindestens einen Bereichs (52) mit Wellenprofil bewegt.

5. Die Membran gemäß einem oder mehreren der vorhergehenden Ansprüche, **dadurch gekennzeichnet, dass** es im Spritzguss hergestellt ist.

6. Ein pneumatisches Ventil vom Typ, das eine Membran aufweist, die eine Durchflußanordnung (13) betätigt, insbesondere mit indirekter elektropneumatischer Betätigung, **dadurch gekennzeichnet, dass** sie eine Membran (50) gemäß einem oder mehreren der vorhergehenden Ansprüche umfasst.

7. Das pneumatische Ventil gemäß Anspruch 6, **dadurch gekennzeichnet, dass** es einen Ventilkörper (11) umfasst, der intern mit einer Aufnahme (12) bereitgestellt ist, in der eine Durchflußanordnung (13) so angeordnet ist, dass sie gleiten kann, wobei die Durchflußanordnung von einem Schaft (14) zur Unterstützung von zwei entgegengesetzten konischen Durchflußelementen (15) gebildet ist, die korrespondierenden Dichtungssitzen (16), an denen sie während des Betriebs des Ventils (10) entsprechend anliegen, gegenüberstehen, wobei die Aufnahme (12) funktionell mit einem ersten Hauptflüssigkeitsversorgungsanschluss (17), auf den das Ventil (10) einwirkt, und mit einem zweiten Anschluss (18) und mit einem dritten Anschluss (19) verbunden ist, von denen jedes funktionell mit einer korrespondierenden, außerhalb des Ventils befindlichen Umgebung verbunden ist, wobei die Membran (50) durch die äußere Kante (56) an dem Ventilkörper (11) und durch die innere Kante (57) an der Durchflußanordnung (13) verriegelt ist, wobei die Membran (50) im Wesentlichen entlang des konvexen Teils (54) des Bereiches (52) mit einem Wellenprofil mit der Durchflußanordnung (13) in Verbindung steht, die Membran (50) in der Aufnahme eine erste Kammer (28) zur Verbindung zwischen dem erstem Anschluss (17), dem zweiten Anschluss (18) und dem dritten Anschluss (19), und eine zweite Kammer (29), die funktionell mit einer elektropneumatischen Betätigungseinheit (30) verbunden ist, bildend, wobei der Hauptflüssigkeitsversorgungsanschluss (17) weiter funktionell mit der elektropneumatischen Betätigungseinheit (30) verbunden ist, wobei Mittel (32) zur Rückkehr aus der inaktiven Position mit der Durchflußanordnung (13) assoziiert sind.

8. Das pneumatische Ventil gemäß Anspruch 7, **dadurch gekennzeichnet, dass** der Ventilkörper (11) von einem Zentralblock (20), der an seinen zwei Enden geöffnet ist und an dem die erste Kammer (28) ausgebildet ist, von einer ersten Abschlussendplatte (21), die zusammen mit der Membran (50) die zweite Kammer (29) bildet, und von einer zweiten Abschlussendplatte (22), die gegenüber der ersten Endplatte (21) liegt, gebildet ist, wobei die Membran (50) durch die äußere Kante (56) zwischen dem Zentralblock (20) und der ersten Endplatte (21) eingezwängt ist.

9. Das pneumatische Ventil gemäß einem oder mehreren der Ansprüche 7 bis 8, **dadurch gekennzeichnet, dass** die konischen Durchflußelemente (15) eine ringförmige Aussparung (24) auf der in Bezug auf die jeweiligen Dichtungssitze (16) gegenüberliegenden Seite aufweisen.

## Revendications

1. Membrane, en particulier pour vide commandé, utilisable dans des soupapes pneumatiques présentant une membrane qui actionne un ensemble de contrôle de flux, constituée par un disque (51) réalisé en un matériau au moins partiellement élastique et qui présente, en coupe transversale, au moins une région (52) qui a un profil ondulé comprenant une partie convexe (54) et une partie concave (55) à la suite de ladite partie convexe (54), **caractérisée en ce que** ledit disque (51) est réalisé en un matériau polymérique, ladite région (52) à profil ondulé ayant une épaisseur réduite.

2. Membrane selon la revendication 1, **caractérisée en ce que** ledit disque (51) est muni axialement d'un trou (53) pour le centrage et le verrouillage sur l'ensemble de contrôle de flux actionné par ladite membrane (50), ladite au moins une région (52) à profil ondulé étant formée, lorsque ladite membrane (50) est dans la configuration active, au moyen d'une ondulation, du centre vers l'extérieur du disque (51), de la partie convexe (54) qui est dirigée vers ledit ensemble de contrôle de flux et ladite partie concave (55) à la suite de ladite partie convexe (54).

3. Membrane selon la revendication 2, **caractérisée en ce que** les coupes transversales du bord externe (56) et du bord interne (57) dudit disque (51) avec ledit trou (53) sont partiellement circulaires, avec des diamètres plus larges que l'épaisseur de ladite au moins une région à profil ondulé (52).

4. Membrane selon la revendication 3, **caractérisée en ce que** les parties (58) dudit disque (51) qui sont contiguës audit bord externe (56) et audit bord interne (57) sont plates et présentent une épaisseur qui est comprise entre le diamètre desdits bords (56, 57) et de ladite au moins une région (52) à profil ondulé.

5. Membrane selon une ou plusieurs des revendications précédentes, **caractérisée en ce qu'**elle est produite par moulage par injection.

6. Soupape pneumatique du type comprenant une membrane qui actionne un ensemble de contrôle de flux (13), en particulier par actionnement électropneumatique indirect, **caractérisée en ce qu'**elle comprend une membrane (50) selon une ou plusieurs des revendications précédentes.

7. Soupape pneumatique selon la revendication 6, **caractérisée en ce qu'**elle comprend un corps de valve (11) muni intérieurement d'un réceptacle (12), dans lequel un ensemble de contrôle de flux (13) est agencé de sorte à pouvoir coulisser, ledit ensemble de contrôle de flux étant formé par une tige (14) pour supporter deux éléments (15) de contrôle de flux coniques mutuellement opposés, qui font face à des sièges étanches correspondants (16) sur lesquels ils viennent respectivement en butée au cours de l'opération de ladite soupape (10) ledit réceptacle (12) étant connecté de façon fonctionnelle à un premier orifice principal d'alimentation en fluide (17), sur lequel ladite soupape (10) agit, et à un deuxième orifice (18) et à un troisième orifice (19), chacun desquels connecté de façon fonctionnelle à un environnement correspondant situé à l'extérieur de la soupape, ladite membrane (50) étant verrouillé par ledit bord externe (56) sur ledit corps de soupape (11) et par ledit bord interne (57) sur ledit ensemble de contrôle de flux (13), ladite membrane (50) étant sensiblement en contact avec ledit ensemble de contrôle de flux (13) le long de la partie convexe (54) de ladite région (52) à profil ondulé, ladite membrane (50) formant, dans ledit réceptacle (12), une première chambre (28) pour la connexion entre ledit premier orifice (17), ledit deuxième orifice (18) et ledit troisième orifice (19), et une deuxième chambre (29), qui est connectée de façon fonctionnelle à une unité d'actionnement électropneumatique (30), ledit premier orifice principal d'alimentation en fluide (17) étant en outre connecté de façon fonctionnelle à ladite unité d'actionnement électropneumatique (30), des moyens (32) de retour à la position inactive étant associés audit ensemble de contrôle de flux (13).

8. Soupape pneumatique selon la revendication 7, **caractérisée en ce que** ledit corps de soupape (11) est composé d'un bloc central (20), qui est ouvert à ses deux extrémités et sur lequel ladite première chambre (28) est formée, d'un premier culot de fermeture (21), qui forme ladite deuxième chambre (29) avec ladite membrane (50), et d'un deuxième culot de fermeture (22), qui se trouve à l'opposé dudit premier culot de fermeture (21), ladite membrane étant prise en sandwich par ledit bord externe (56) entre ledit bloc central (20) et ledit premier culot de fermeture (21).

9. Soupape pneumatique selon une ou plusieurs des revendications 7 à 8, **caractérisée en ce que** lesdits éléments coniques de contrôle de flux (15) présentent un évidement annulaire (24) sur le coté opposé par rapport auxdits sièges étanches respectifs (16).
